Europäisches Patentamt

European Patent Office

Office européen des brevets

(19)

(11) Veröffentlichungsnummer: **0 029 562**
**B1**

(12) # EUROPÄISCHE PATENTSCHRIFT

(45) Veröffentlichungstag der Patentschrift:
02.07.86

(51) Int. Cl.⁴: **A 22 B 5/00, G 01 N 33/12**

(21) Anmeldenummer: **80107105.1**

(22) Anmeldetag: **15.11.80**

(54) Verfahren zur Klassifizierung eines Tierkörpers.

(30) Priorität: **21.11.79 DE 2946912**

(43) Veröffentlichungstag der Anmeldung:
**03.06.81 Patentblatt 81/22**

(45) Bekanntmachung des Hinweises auf die Patenterteilung:
**02.07.86 Patentblatt 86/27**

(84) Benannte Vertragsstaaten:
**AT BE CH DE GB LI NL**

(56) Entgegenhaltungen:
**GB-A-2 000 280**

(73) Patentinhaber: **Pfister GmbH, Stätzlinger Strasse 70, D-8900 Augsburg (DE)**

(72) Erfinder: **Görl, Reinhard, Buchenstrasse 2, D-8901 Neusäss (DE)**

EP 0 029 562 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Klassifizierung eines Tierkörpers gemäß dem ersten Teil des Patentanspruchs 1.

Bei der Feststellung von Handelsklassen für Schweinehälften werden folgende Bewertungsmaßstäbe angelegt:

1. Die Bewertung des Fettgewebeanteils aufgrund der Rückenspeckdicke unter Berücksichtigung des Zweihälftengewichts.

2. Die subjektive Bewertung der Fleischfülle in den fleischtragenden Körperpartien wie Schinken, Kamm, Bug und Rauch.

Von diesen Kriterien ist jedoch lediglich die Rückenspeckdicke an definierter Stelle eine objektiv meßbare Größe. Dagegen besteht für die Bewertung der Fleischfülle in den verschiedenen fleischtragenden Körperpartien ein nicht unerheblicher Ermessensspielraum infolge der subjektiven Bewertungsmöglichkeit des Klassierungspersonals.

Aus der GB-A-2000 280 ist es bekannt, die Konturenform und Dicke in einer bestimmten Meßrichtung des Hinterschinkens als Parameter zur Festlegung der Fleischfülle heranzuziehen. Hierbei wird die Schinkenkontur abgetastet und die sich ergebenden zahlreichen Meßwerte werden mittels einer Photozellenmatrix ausgewertet. Das bekannte Verfahren ist verhältnismäßig umständlich und zeitraubend.

Der Erfindung liegt die Aufgabe zugrunde, ein Verfahren zur Klassifizierung eines Tierkörpers anzugeben, bei dem aussagekräftige Meßwerte mit einfachen Mitteln rasch und mit geringen Toleranzen festgestellt werden können.

Diese Aufgabe wird gemäß der Erfindung gelöst durch ein Verfahren mit den Merkmalen des kennzeichnenden Teils des Patentanspruchs 1.

Der Winkel $\alpha$, wie er durch das erfindungsgemäße Verfahren festgestellt wird, stellt eine besonders exakte Bewertungsgröße dar und kann sehr einfach und rasch festgestellt werden.

Bevorzugte Weiterbildungen des erfindungsgemäßen Verfahrens sind in den abhängigen Ansprüchen gekennzeichnet. Im folgenden wird die Erfindung anhand von Ausführungsbeispielen in der Zeichnung näher erläutert. Es zeigen:

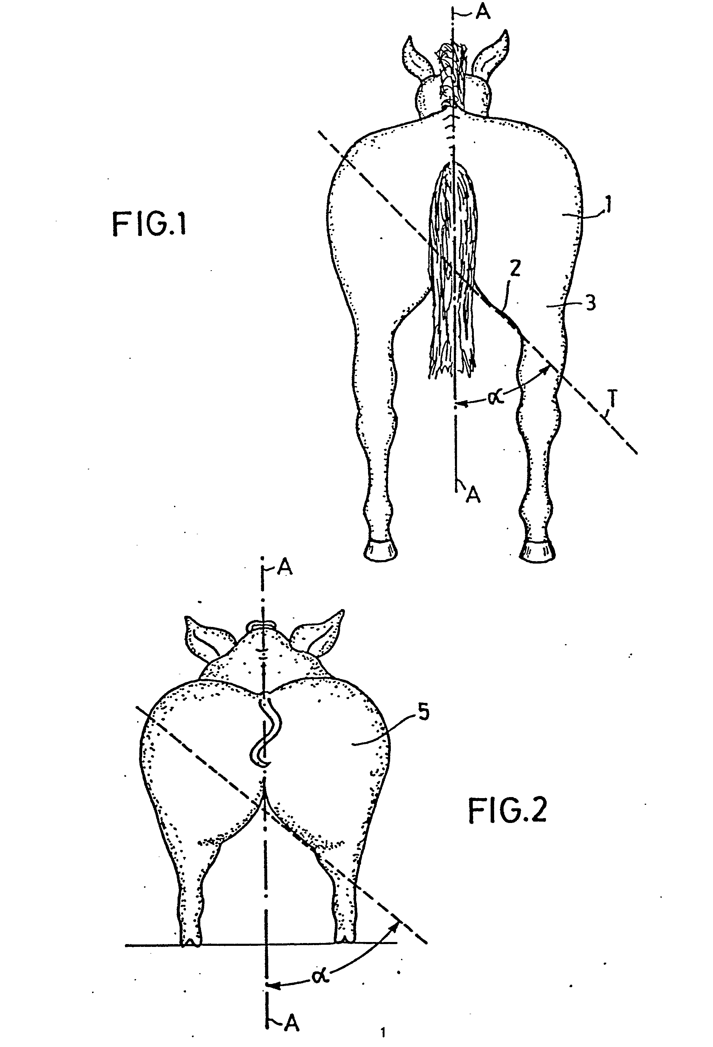

Fig. 1 je einen Tierkörper von hinten, in Ansicht, und
Fig. 2

Fig. 3 je eine Schweinehälfte der Handelsklassen E,
Fig. 4 I, II, III, hängend, in Rückenansicht, Fig. 5
Fig. 6

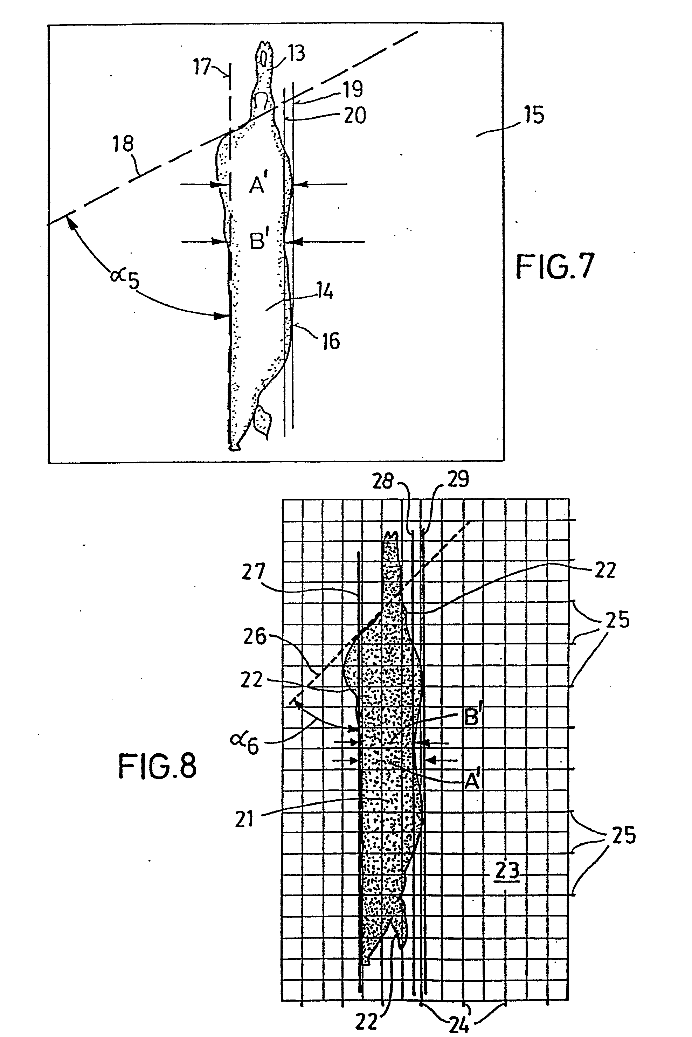

Fig. 7 ein video-optisches Meßfeld mit einer Schweinehälfte, mit Markierungslinien,

Fig. 8 ein video-optisches Meßfeld mit dem Umriß-Bild einer Schweinehälfte und einem eingeblendeten Meßfeld-Raster sowie mit optischen Markierungslinien.

An dem in Ansicht von hinten gemäß Fig. 1 dargestellten Tierkörper 1, beispielsweise eines Pferdes, ist an einer mittigen, inneren Partie 2 des Oberschenkels 3 eine Tangente "T" angelegt, welche gegenüber einer vertikalen Ebene A - A den Winkel $\alpha$ einschließt.

Wie bereits weiter oben dargelegt, liegt der Erfindung der Überraschende Vorteil zugrunde, daß dieser Winkel $\alpha$ für die Fleischfülle und damit für den Körperbautyp ein bezeichnendes Merkmal darstellt. Bei einem kräftigen Körperbautyp ist beispielsweise der Winkel $\alpha$ größer als bei einem schwachen Körperbautyp, und umgekehrt. Die Darstellung in Fig. 1 läßt im übrigen erkennen, daß die Ermittlung des Winkels $\alpha$ nicht nur zur Erkennung des Körperbautypes bei einem Schlachttierkörper bzw. einer Schlachttierhälfte dienlich ist, sondern daß dieser Winkel auch bei lebenden Tieren als Kriterium für den Körperbautyp herangezogen werden kann.

Fig. 2 zeigt in gleicher Darstellungsweise, das heißt in Ansicht von hinten, ein lebendes Schwein 5, dessen beispielsweise kräftiger Körperbautyp durch einen relativ großen Winkel $\alpha$ signalisiert wird.

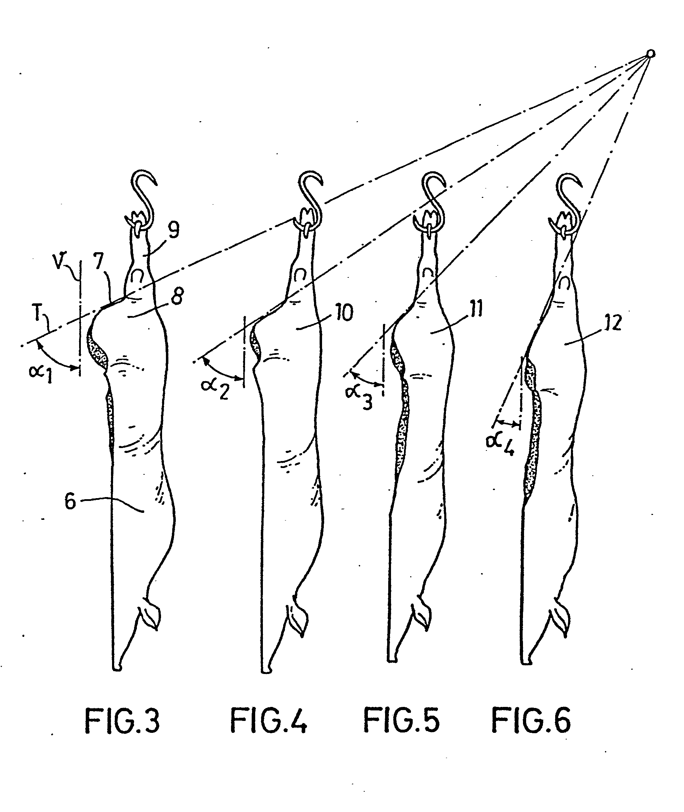

Die Ermittlung von unterschiedlichen Körperbautypen zeigen im übrigen anhand von vier unterschiedlich abgestuften Schweinehälften die Fig. 3 bis 6. Hierbei entspricht die Schweinehälfte 6 der Fig. 3 einer Handelsklasse "E" mit insgesamt ca. 60,2 % Fleischanteil und insgesamt ca. 19,6 % Fettgewebe. Da sich der Wert der Schweinehälfte üblicherweise nach dem Fleischanteil bemißt, entspricht diese Schweinehälfte 6 der obersten Güteklasse und damit der obersten Preisklasse.

Entsprechend zeigt der gegenüber einer vertikalen Ebene "V" durch Anlegen einer Tangente "T" an eine mittige innere Partie 7 des Oberschenkels 8 bei der am Hinterbein 9 aufgehängten Schlachtkörperhälfte 6 ermittelte Winkel $\alpha_1$ einen relativ großen Betrag von 65 Grad.

Die Schweinehälfte 10 in Fig. 4, welche einer Handelsklasse 1 mit 52,9 % Fleischanteil und 25,5 % Fettgewebe entspricht, und mit dem Attribut "vollfleischig" bezeichnet wird, ergibt den Winkel $\alpha_2$ von 56°.

Die Schweinehälfte 11 in Fig. 5, welche der Handelsklasse 11 = "fleischig" entspricht und im Durchschnitt 49,0 % Fleischanteil und 29,6 % Fettgewebe aufweist, ergibt einen Winkel $\alpha_3$ von 43°.

Und schließlich ergibt sich bei der Schweinehälfte 12 in Fig. 6, welche der Handelsklasse III = "weniger fleischig" zuzuordnen ist und im Durchschnitt 44,7 % Fleischanteil und 33,7 % Fettgewebe aufweist, ein Winkel $\alpha_4$ von ca. 22°. Damit ist erwiesen, daß der überraschende Vorteil der Erfindung, wonach der Winkel $\alpha$ für den Körperbautypus ein signifikantes Merkmal darstellt, mit den Gegebenheiten der Praxis voll übereinstimmt. Die Richtigkeit dieser technischen Lehre wurde im übrigen durch eine Testreihe an einigen 100 Schweinehälften statistisch bewiesen.

Die am Hinterbein 13 auigehängte Schweinehälfte 14 in Fig. 7 wird im Bildausschnitt 15 von einer video-optischen Kamera in Umrissen gemäß der Linie 16 abgebildet. Zu erkennen sind ferner in diesem Bildausschnitt 15 eingeblendete Linien 17, 18, 19, und 20. Dabei folgt die Linie 17 dem Verlauf der gespaltenen Wirbelsäule, und wurde beispielsweise durch körperliches Abtasten mit einem entsprechenden Gerät ermittelt.

Zwischen den Linien 17 und 18 ergibt sich der Winkel $\alpha_5$, während die parallele Entfernung zwischen den Linien 17 und 19 die maximale Hüftbreite "A", und die Entfernung zwischen den parallelen Linien 17 und 20 die minimale Taillenbreite "B" ergibt.

Ein anderes, ebenfalls von einer Video-Kamera erfaßtes Abbild einer Schweinehälfte 21 zeigt Fig. 8. Dieses Abbild ist ebenfalls - wie in Fig. 7 - als Umriss entsprechend der Konturlinie 22 erkennbar, welchen die Körperform wie einen Schattenriß erkennen läßt.

Als Meßhilfe ist mit optischen Mitteln dem Abbild des Körpers 21 ein Meßraster 23 überlagert, welches mit Meßmarken 24, 25 gleichen Abstandes eingeteilt und diese wiederum beispielsweise in eine Zehnerteilung durch Hilfslinien unterteilt sind. Die Absrände von Meßmarken 24/24 entsprechen einer bestimmten Abmessung am Objekt der Schweinehälfte 21.

Das Bild 23 enthält ferner eingeblendete Hilfs-Meßlinien 26, 27, 28, 29. Die Hilfslinien 26 und 27 schließen den Winkel $\alpha_6$ ein, während sich aus der parallelen Entfernung der Linien 27 und 29 das Maß "A" der maximalen Hüftbreite ergibt und aus der Entfernung der Linien 27 und 28 das Maß "B" der minimalen Taillenbreite.

Die gezeigten und beschriebenen Beispiele in der Darstellung entsprechend den Figuren 1 bis 8 dienen lediglich der prinzipiellen Erläuterung und sind keineswegs erschöpfend für die Ausführungsmöglichkeiten der Erfindung. Unter diese fallen alle Anwendungsmöglichkeiten, welche im handwerklichen Ermessen des Fachmannes liegende Alternativen einschließen, sofern diese einem der geltenden Patentansprüche genügen.

## Patentansprüche

1. Verfahren zur Klassifizierung eines Tierkörpers, insbesondere einer Schweinehälfte, in Handelsklassen, wobei eine wertgerechte Einstufung des Körperbautypes durch Bewertung sowohl des Fettgewebeanteiles, insbesondere der Rückenspeckdicke, unter Berücksichtigung des Zweihälften-Gewichtes, als auch der Fleischfülle in den fleischtragenden Körperpartien erfolgt, und wobei als Bewertungsgröße unter anderem der Verlauf der Kontur des Hinterschinkens optisch erfaßt und bewertet wird, dadurch gekennzeichnet, daß als Bewertungsgröße das Maß eines Winkel $\alpha$ verwendet wird, welcher sich zwischen der Symmetrie- A-A bzw. Trennebene (17,27) des Körpers als Bezugsebene und einer Tangente (T) ergibt, die an eine Stelle der Hinter schinken-Kontur angelegt wird, welche auf der Mitte einer Verbindungslinie zwischen dem Ansatz des Hinterbeines und dem Schnittpunkt der Bezugsebene mit der Kontur liegt.

2. Verfahren nach Anspruch 1, dadurch gekennzeichnet, daß zusätzlich das Verhältnis (A'/B') der maximalen Hüftbreite (A') zur minimalen Taillenbreite (B') vorzugsweise aus der Rückenansicht mindestens einer Körperhälfte (14) als dimensionslose Verhältniszahl ermittelt wird und daß dieses Verhältnis (A'/B') als Faktor zusammen mit der Größe des Winkels $\alpha$ zur Bestimmung des Körperbautypes verwendet wird.

3. Verfahren nach einem der Ansprüche 1 oder 2, dadurch gekennzeichnet, daß zur Einstufung des Körperbautypes zusätzlich noch folgende Meßgrößen bestimmt werden:
a) das Maß der minimalen Speckdicke über dem "gluteus medius" genannten Muskel an der hinteren Rückenpartie in Richtung der Symmetrie-Ebene,
b) die absoluten Abmessungen von Hüftbreite (A') und Taillenbreite (B')

4. Verfahren nach einem der Ansprüche 2 oder 3, dadurch gekennzeichnet, daß bei der Messung insbesondere der Taillenbreite (B') und Hüftbreite (A') einer Schlachthälfte die fehlende oder nicht sichtbare Symmetrie- und/oder Trennebene des Körpers oder der Hälfte durch eine künstliche Bezugsebene (17,27) ersetzt wird, welche dem Verlauf der Wirbelsäule entspricht und vorzugsweise durch Abtasten der gespaltenen Wirbelsäule ermittelt wird.

5. Verfahren nach einem der Ansprüche 1 his 4, dadurch gekennzeichnet, daß die Ermittlung der Meßgrößen ($\alpha$, A', B') mit video-optischem Gerät durchgeführt wird, und daß zumindest die künstliche Bezugsebene (17, 27) durch Einblenden einer Bezugsmarkierung, beispielsweise einer Linie, oder durch Abdecken eines Bildausschnittes, in dem Sicht- und Meßfeld (15,23) des video-optischen Gerätes markiert wird.

6. Verfahren nach einem der Ansprüche 1 bis 5, dadurch gekennzeichnet, daß als Meßhilfen und/oder Bezugsgrößen in dem Sicht- und Meßfeld (15, 23) optische Markierungen (17, 18, 19, 20, 26, 27, 28, 29) erzeugt werden.

7. Verfahren nach einem der Ansprüche 5 oder 6, dadurch gekennzeichnet, daß die optischen Markierungen zur Erfassung absoluter Meßwerte (A', B',$\alpha$) Punkte, Linien oder Maßeinheiten, in Form eines skalenartigen Rasters (23) mit Eichmarken (24, 25) definierten Ahstandes und/oder eine Einteilung in Winkelgrade sind.

## Claims

1. Method for classifying the body of an animal, in particular a half of a pig, into classes, with an appropriate classification of the type of body structure being carried out by means of an evaluation of both the share of fatty tissue, in particular the thickness of the fat on the back, taking into account the weight of the two halves, and the volume of meat in the meat-containing parts of the body, and with, among other things, the course of the contour of the buttocks being optically detected and evaluated as a quantity of evaluation,

<u>characterized in that</u>

as a quantity of evaluation the measure of an angle α is used which is obtained between the plane of symmetry (A-A) and the junction plane (17,27) of the body as a reference plane and a tangent (T), which is applied at a point of the contour of the buttocks, which lies on the center of a connecting line between the upper end of the rear leg and the point of intersection of the reference plane with the contour.

2. Method in accordance with claim 1, characterized in that in addition the ratio (A'/B') of the maximum hip width (A') with respect to the minimum waist width (B') is preferably determined from the back view of at least one body half (14) as a dimensionless proportionality factor, and that said ratio (A'/B') is used as a factor together with the size of the angle α for the determination of the type of body structure.

3. Method in accordance with one of claims 1 or 2, characterized in that for classifying the type of body structure the following measuring quantities are additionally determined:

a) the measure of the minimum thickness of fat over the muscle called "gluteus medius" at the rear portion of the back in the direction of the plane of symmetry,

b) the absolute dimensions of the hip width (A') and the waist width (B').

4. Method in accordance with one of claims 2 or 3, characterized in that in the measurement in particular of the waist width (B') and the hip width (A') of a half of an animal body the missing or not visible plane of symmetry and/or junction plane of the body or the half is replaced by an artificial reference plane (17,27) which corresponds to the course of the spine and is preferably determined by scanning the split spine.

5. Method in accordance with one of claims 1 to 4, characterized in that the determination of the measuring quantities (α, A', B') is carried out with a video-optical apparatus, and that at least the artificial reference plane (17,27) is marked by adding a reference mark, such as a line, or by covering a section of a picture in the field of vision and measurement (15,23) of the video-optical apparatus. 6. Method in accordance with one of claims 1 to 5, characterized in that as measurement helps and/or reference quantities in the field of vision and measurement (15, 23) optical marks (17, 18, 19, 20, 26, 27, 28, 29) are generated.

7. Method in accordance with one of claims 5 or 6, characterized in that the optical marks for the determination of absolute measuring values (A', B',α) are dots, lines or measuring units in the form of a scale-type raster (23) with calibration marks (24, 25) with a defined distance and/or a graduation in angular degrees.

## Revendications

1. Procédé de classification d'une carcasse animale, en particulier d'une moitié de porc, selon des classes marchandes, selon lequel est établie une classification par valeurs du type de structure de carcasse par évaluation aussi bien de la partie de tissu adipeux, en particulier de l'épaisseur de lard dorsale, eu égard au poids des deux moitiés, que de la quantité de viande dans les parties charnues de la carcasse, et selon lequel on préléve optiquement et on mesure, entre autres, en tant que grandeur d'évaluation, la direction du contour de la partie arrière du jambon, caractérisé en ce que, en tant que grandeur d'évaluation, on utilise la mesure d'un angle (α) qui est compris entre le plan de symetrie (A-A) ou le plan de séparation (17,27) de la carcasse, considéré comme plan de référence, et une tangente (T) qui passe en un emplacement de la partie arriere du jambon qui se situe au milieu d'une ligne de liaison qui s'étend entre la naissance de la cuisse arrière et le point d'intersection du plan de référence avec ledit contour.

2. Procédé selon la revendication 1, caractérisé en ce que l'on détermine supplementairement, en tant que rapport numérique sans dimension, le rapport (A'/B') de la largeur maximale aux hanches (A') à la largeur minimale à la ceinture (B'), de préférence par une observation de l'arrière d'au moins une moitié de carcasse (14), et en ce que ce rapport (A'/B') est utilisé comme facteur, en même temps que la grandeur de l'angle (α), pour la détermination du type de structure de carcasse.

3. Procédé selon la revendication 1 ou 2, caractérisé en ce que, pour la classification du type structurel de carcasse, on détermine supplémentairement les grandeurs de mesure suivantes:

a) la mesure de l'épaisseur de lard minimale sur le muscle appelé "gluteus medius" sur la partie dorsale postérieure en direction du plan de symétrie,

b) les mesures absolues des largeurs de hanches (A') et de ceinture (B').

4. Procédé selon la revendication 2 ou 3, caractérisé en ce que, lors de la mesure en particulier de la largeur de ceinture (B') et de la largeur de hanches (A') d'une demi-carcasse, le plan de symétrie et/ou de séparation manquant ou non visible de la carcasse ou de la moitié de carcasse est remplacé par un plan de réference artificiel (17,27) qui correspond au plan de la colonne vertébrale, et de préférence par palpage de la colonne vertébrale fendue.

5. Procédé selon l'une quelconque des revendications 1 à 4, caractérisé en ce que la détermination des grandeurs de mesure (α,A',B')

est effectuée par un appareil vidéo-optique, et en ce que au moins le plan de référence artificiel (17,27) est marqué par masquage d'une marque de référence, par exemple d'une ligne, ou par recouvrement d'un cadrage dans le champ de vision et de mesure (15,23) de l'appareil vidéo-optique.

6. Procédé selon l'une quelconque des revendications 1 à 5, caractérisé en ce que l'on élabore, comme moyens auxiliaires de mesure et/ou grandeurs de réference, des marques optiques (17, 18, 19, 20, 26, 27, 28, 29) dans le champ de vision et de mesure (15,23).

7. Procédé selon la revendication 5 ou 6, caractérisé en ce que les marquages optiques pour l'obtention des valeurs de mesure absolues $(A',B',\alpha)$ sont des points, des lignes ou des unités de mesure sous la forme d'un quadrillage en forme de graduations (23) avec une distance définie avec des marques de repere et/ou une division en degrés d'angle.

FIG.1

FIG.2

0 029 562

FIG.3    FIG.4    FIG.5    FIG.6

FIG.7

FIG.8